# FASCICULE DE BREVET EUROPEEN

(11) **EP 2 496 356 B1**
(45) Date de publication et mention de la délivrance du brevet: **21.02.2018**
(21) Numéro de dépôt: 10771792.8
(22) Date de dépôt: 04.11.2010
(51) Int. Cl.: B04B 9/08

(54) **CENTRIFUGEUSE COMPRENANT DES MOYENS D'INDICATION VISUELLE ET/OU TACTILE DU MONTAGE CORRECT DU ROTOR SUR L'ARBRE D'ENTRAÎNEMENT, ET ROTOR CORRESPONDANT**
ZENTRIFUGE MIT TAKTILEN UND/ODER VISUELLEN MONTAGEANZEIGEMITTELN DES ROTORS AUF DER ANTRIEBSWELLE UND ENTSPRECHENDER ROTOR
CENTRIFUGE COMPRISING VISUAL AND/OR TACTILE MEANS FOR CONTROLLING THE CORRECT ROTOR ASSEMBLING ON THE DRIVE SHAFT, AND CORRESPONDING ROTOR

(30) Priorité: 04.11.2009 FR 0905278
(43) Date de publication de la demande: 12.09.2012
(73) Titulaire: Alliance Bio Expertise, 35480 Guipry (FR)
(72) Inventeur: LETOURNEUR, Jean-Claude, 44380 Pornichet (FR); LE GUYADER, Philippe, 44130 Blain (FR); LAMBERT, Roland, 44130 Le Gavre (FR); FONDIN, Jean-Louis, 44410 Saint Lyphard (FR)
(74) Mandataire: Vidon Brevets & Stratégie
(86) Numéro de dépôt international: PCT/EP2010/066821
(87) Numéro de publication internationale: WO 2011/054906

(56) Documents cités:
- EP-A1- 0 911 080
- WO-A1-83/04379
- GB-A- 2 424 607
- JP-A- 1 030 665

## Description

Le domaine de l'invention est celui de la conception et de la fabrication des équipements de centrifugation. Plus précisément, l'invention concerne les centrifugeuses utilisées dans les domaines biologiques pour centrifuger les produits contenus dans des récipients disposés dans des logements aménagés dans le rotor ou portés par celui-ci.

De façon classique, une centrifugeuse comprend :
- un arbre d'entraînement,
- un rotor destiné à être monté de façon amovible sur l'arbre d'entraînement dans une position de montage pour laquelle l'arbre d'entraînement et le rotor sont accouplés en rotation,
- un dispositif de blocage axial du rotor sur l'arbre d'entraînement, comprenant un élément mâle porté par le rotor, sollicité élastiquement et susceptible d'occuper une position de coopération avec un élément femelle présenté par l'arbre d'entraînement.

Dans les centrifugeuses de ce type, le blocage axial du rotor sur l'arbre d'entraînement doit être obtenu de la façon la plus fiable possible. En effet, un blocage axial insuffisant peut, lors du fonctionnement de la centrifugeuse, engendrer un risque important d'accident dû à un détachement fortuit du rotor.

Différentes solutions ont été proposées par l'art antérieur pour réaliser un blocage axial du rotor sur l'arbre à l'aide de systèmes d'accouplement munis de moyens de blocage axial déverrouillables depuis l'extérieur. Toutefois, ces dispositifs imposent à l'opérateur de réaliser le montage du rotor sur l'arbre d'entraînement avec une grande attention et une bonne précision pour que les moyens de blocage occupent la position dans laquelle ils assurent le blocage axial avec une grande efficacité. En effet, ces moyens de blocage doivent être positionnés axialement de façon appropriée, faute de quoi le rotor peut se désengager de l'arbre d'entraînement lors de la mise en rotation de la centrifugeuse ou pendant le fonctionnement de celle-ci, avec des conséquences qui peuvent être dramatiques, en termes de détérioration de l'équipement ou, au pire, pour le personnel présent au voisinage de la centrifugeuse.

Une solution décrite par le document de brevet EP-0 712 667 a été proposée pour pallier cet inconvénient. Selon cette technique, l'élément mâle du dispositif de blocage est monté sur le rotor, et des moyens de déverrouillage actionnables depuis l'extérieur du rotor sont prévus pour permettre à l'opérateur de mettre l'élément mâle en position dégagée de l'évidement de retenue. Parallèlement, l'extrémité libre de l'arbre d'entraînement présente des moyens de guidage coopérant avec des moyens complémentaires solidaires du rotor pour amener le rotor, lors de l'engagement de l'arbre dans le rotor, à pivoter autour de son axe depuis n'importe quelle position angulaire de départ et à descendre le long de l'arbre jusque dans une position dans laquelle le rotor est solidarisé en rotation avec l'arbre, l'élément mâle étant alors repoussé élastiquement dans l'élément femelle pour assurer un blocage axial du rotor.

Un avantage de cette technique est que l'élément mâle et l'élément femelle peuvent être réalisés avec un profil de profondeur suffisante pour qu'il se produise, au moment où le rotor atteint sa position de montage, un déclic suffisamment sonore pour informer l'opérateur que le verrouillage a bien été enclenché.

Toutefois, la plupart du temps, une centrifugeuse est présente dans un local où se trouvent également d'autres centrifugeuses et/ou d'autres équipements. Les centrifugeuses et/ou les autres équipements présents s'avèrent en pratique relativement bruyants pendant leur fonctionnement. Il en résulte que l'opérateur réalisant le montage du rotor sur l'arbre d'entraînement de la centrifugeuse peut ne pas percevoir le déclic sonore, ce dernier étant couvert par l'ambiance sonore environnante.

Cela peut avoir pour conséquence :
- soit, pour l'opérateur, de répéter l'opération jusqu'à être totalement rassuré sur le bon montage du rotor sur l'arbre d'entraînement ;
- soit de lancer le fonctionnement de la centrifugeuse tandis que le montage n'est pas réalisé correctement.

Bien entendu, il est aussi possible que le montage soit effectué correctement.

En d'autres termes, on comprend que, même en présence des moyens de verrouillage produisant un déclic sonore, la qualité du montage du rotor sur l'arbre d'entraînement demeure aléatoire.

L'invention a notamment pour objectif de palier cet inconvénient de l'art antérieur.

Plus précisément, l'invention a pour objectif de proposer une centrifugeuse dont la conception permet à un opérateur de savoir sans ambiguïté si le verrouillage axial du rotor sur l'arbre d'entraînement est réalisé correctement.

L'invention a également comme objectif de fournir une telle centrifugeuse qui assure un blocage axial optimal.

L'invention a aussi pour objectif de fournir une telle centrifugeuse dans laquelle les moyens d'accouplement en rotation du rotor avec l'arbre d'entraînement sont simples de conception et pratiques pour l'opérateur en terme de montage.

Un autre objectif de l'invention est de fournir une telle centrifugeuse qui permette un démontage aisé et rapide du rotor à partir de l'arbre d'entraînement.

Ces objectifs ainsi que d'autres qui apparaîtront par la suite, sont atteints grâce à l'invention qui a pour objet une centrifugeuse conforme à la revendication 1.

Ainsi, grâce à l'invention, l'opérateur dispose d'un moyen simple et efficace lui fournissant une indication claire, sans ambiguïté, que le montage du rotor sur l'arbre d'entraînement est réalisé correctement.

En effet, l'opérateur pourra vérifier d'un simple coup d'oeil et/ou d'une simple vérification au toucher que le rotor occupe une position sur l'arbre d'entraînement assurant son blocage axial.

L'opérateur sera donc ainsi parfaitement rassuré, s'agissant de lancer la centrifugation en toute sécurité.

Le document EP 911 080 publié le 28 avril 1999, décrit une centrifugeuse avec un rotor dont le montage et démontage est facilité. L'opérateur manipule le rotor de forme générale tronconique à l'aide d'un organe d'actionnement solidaire du couvercle et le positionne sur la tête d'entraînement. Des masselottes sont montées en rotation sur la tête d'entrainement dans un évidemment.

Selon le principe de l'invention, le rotor porte une cage annulaire pourvue d'au moins un passage radial au travers duquel lesdits moyens d'indication visuelle et/ou tactile sont destinés à être présentés en saillie, lesdits éléments mâles étant montés pivotants autour d'un axe de pivotement parallèle à l'axe dudit arbre d'entraînement.

De cette façon, lorsque les moyens d'indication font saillie au travers du passage radial de la cage annulaire, l'opérateur peut :
- soit vérifier visuellement la présence de ces moyens d'indication hors de la cage annulaire, ces moyens d'indication pouvant en outre porter un code couleur (tel qu'une pastille verte) signalant un « feu vert » ;
- passer les doigts autour de la cage annulaire, la présence en saillie des moyens d'indication pouvant aisément être ainsi détectés au toucher.

De plus, comme cela va apparaître plus clairement par la suite, l'effet centrifuge engendré par la rotation de la centrifugeuse peut être mis à profit pour augmenter la coopération du ou des éléments mâles avec l'élément femelle présenté sur l'arbre d'entraînement.

Dans ce cas, lesdits éléments mâles comprennent, d'un côté dudit axe de pivotement, une terminaison d'engagement avec ledit élément femelle et, de l'autre côté dudit axe de pivotement, une oreillette destinée à constituer des moyens d'indication visuelle et/ou tactile.

Un tel agencement permet un fonctionnement simple et efficace selon lequel, lorsque la terminaison d'engagement pénètre l'élément femelle de l'arbre d'entraînement, l'élément mâle correspondant pivote de telle sorte que l'oreillette correspondante s'excentre et fournit une indication visuelle et/ou tactile.

Avantageusement, ledit ou lesdits éléments mâles sont montés en partie supérieure du rotor.

Ainsi, le ou les éléments mâles occupent une position qui permet aisément à l'opérateur de vérifier l'indication visuelle et/ou tactile.

Selon une autre caractéristique de l'invention, le rotor porte une goupille diamétrale destinée à venir se loger dans une fente diamétrale dudit arbre d'entraînement pour assurer le couplage en rotation dudit rotor avec ledit arbre d'entraînement.

On obtient ainsi un accouplement simple et efficace, impliquant des opérations de fabrication et de montage plus simples que les solutions classiques de l'art antérieur recourrant à des ergots et/ou à des clavettes pénétrant des logements ou des rainures de l'arbre d'entraînement.

Dans ce cas, ladite goupille est montée dans une coiffe surplombant ladite cage annulaire.

Avantageusement, ledit rotor présente des moyens de repérage de l'orientation de ladite goupille.

De cette façon, l'opérateur peut aisément orienté le rotor par rapport à l'arbre d'entraînement, en faisant coïncider les moyens de repérage avec l'orientation de la fente de l'arbre d'entraînement repérée visuellement au préalable.

On note qu'un autre moyen d'accouplement en rotation peut être mis en oeuvre sans sortir du cadre de l'invention, par exemple en utilisant un arbre d'entraînement cannelé ou hexagonal, le rotor présentant alors un évidement central de forme correspondante.

Selon encore une autre caractéristique de l'invention, la centrifugeuse comprend des moyens de rattrapage des jeux axiaux, ces moyens comprenant avantageusement une bague montée coulissante sur l'arbre d'entraînement et contre laquelle le rotor est destiné à venir en appui, un ressort étant couplé à ladite bague et audit arbre de façon à agir en compression à l'encontre de la poussée vers le bas dudit rotor.

On note que de tels moyens de rattrapage exercent une double fonction :
- celle de rattraper le jeu axial entre le ou les élément mâles et les éléments femelles présentés par l'arbre d'entraînement, de façon à plaquer axialement le ou les éléments mâles à l'intérieur de l'élément femelle ;
- celle de faciliter le retrait du rotor à partir de l'arbre d'entraînement, ceci en exerçant une poussée vers le haut sur le rotor lorsque le ou les éléments mâles sont désengagés de l'élément femelle de l'arbre d'entraînement.

L'invention concerne également un rotor destiné à être monté de façon amovible sur un arbre d'entraînement d'une centrifugeuse, dans une position de montage pour laquelle ledit arbre d'entraînement et ledit rotor sont accouplés en rotation, ledit rotor portant au moins un élément mâle, sollicité élastiquement et susceptible d'occuper une position de coopération avec un élément femelle présenté par ledit arbre d'entraînement de façon à assurant un blocage axial du rotor sur ledit arbre d'entraînement, caractérisé en ce que ledit ou lesdits éléments mâles sont couplés à des moyens d'indication visuelle et/ou tactile procurant une indication visuelle et/ou tactile de ladite position de coopération dudit ou desdits élément mâle, le rotor portant une cage annulaire pourvue d'au moins un passage radial au travers duquel lesdits moyens d'indication visuelle et/ou tactile sont destinés à être présentés en saillie, et ledit ou lesdits éléments mâles étant montés pivotant autour d'un axe de pivotement parallèle à l'axe dudit arbre d'entraînement.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1 est une vue en perspective des moyens d'entraînement et d'un dispositif de verrouillage axial d'une centrifugeuse selon l'invention ;
- la figure 2 est une vue de dessus de la partie active du dispositif de verrouillage axial d'une centrifugeuse selon l'invention ;
- la figure 3 illustre schématiquement, selon une coupe verticale, une centrifugeuse selon l'invention ;

- la figure 4 est une vue de détail du rotor d'une centrifugeuse selon l'invention ;
- les figures 5 et 6 sont des vues partielles de dessus du dispositif de verrouillage d'une centrifugeuse selon l'invention, respectivement en position déverrouillée et en position verrouillée ;
- la figure 7 est une vue partielle du couvercle et des moyens de blocage axial du rotor sur l'arbre d'entraînement d'une centrifugeuse selon l'invention ;
- les figures 8 et 9 sont des vues de dessus des moyens de blocage axial du rotor sur l'arbre d'entraînement d'une centrifugeuse selon l'invention, respectivement en position de verrouillage et en position de déverrouillage ;
- les figures 10 et 11 illustrent des courbes de signaux détectés par des moyens tachymétriques d'une centrifugeuse selon l'invention, respectivement en position de verrouillage et en position de déverrouillage des moyens de blocage axial du rotor sur l'arbre d'entraînement.

Tel qu'indiqué précédemment, le principe de l'invention réside dans le fait d'associer, dans une centrifugeuse, des moyens de verrouillage axial du rotor sur l'arbre d'entraînement à des moyens d'indication visuelle et/ou tactile procurant une indication visuelle et/ou tactile lorsque le ou les éléments mâles du dispositif de verrouillage axial sont en position de coopération avec l'élément femelle de l'arbre d'entraînement.

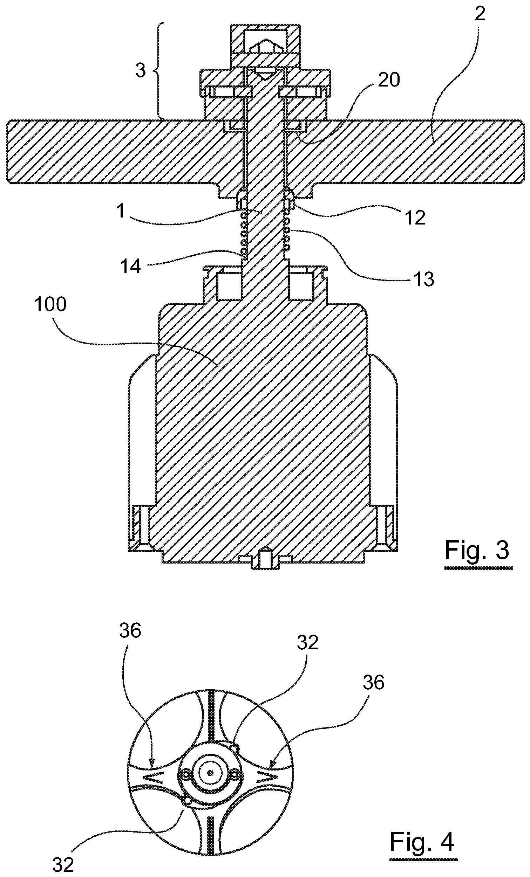

En référence à la figure 3, une centrifugeuse selon l'invention comprend de façon classique en soi une cuve (non représentée) intégrant :
- un bloc moteur 100 relié à un arbre d'entraînement 1 ;
- un rotor 2 monté de façon amovible sur l'arbre d'entraînement 1, dans une position de montage pour laquelle l'arbre d'entraînement et le rotor sont accouplés en rotation ;
- un dispositif 3 assurant un blocage axial du rotor sur l'arbre d'entraînement.

Selon le présent mode de réalisation, le blocage axial du rotor sur l'arbre d'entraînement est obtenu par la mise en oeuvre de :
- une gorge annulaire 10 ménagée sur l'arbre d'entraînement, constituant un élément femelle présenté par l'arbre d'entraînement ;
- une paire d'éléments mâles 300, portés par le rotor et susceptibles d'occuper une position de coopération avec la gorge annulaire 10 en étant engagés dans celle-ci sous l'action d'une sollicitation élastique.

Selon le principe de l'invention, les éléments mâles 300 sont couplés à des moyens d'indication visuelle et/ou tactile (décrits plus en détails par la suite) procurant une indication visuelle et/ou tactile de la position de coopération des éléments mâles 300 avec la gorge annulaire 10 de l'arbre d'entraînement, c'est-à-dire lorsque les éléments mâles sont engagés dans la gorge annulaire (le blocage axial du rotor sur l'arbre d'entraînement étant alors assuré).

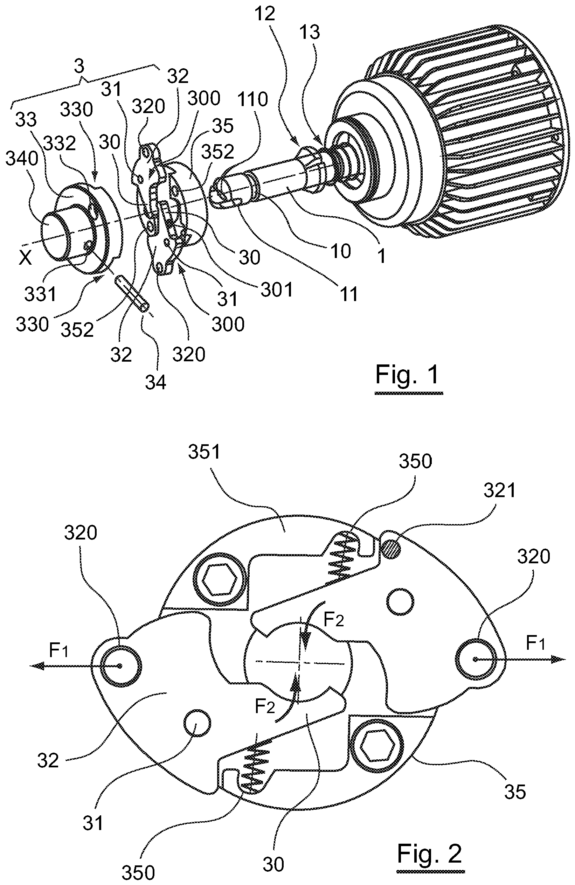

En référence aux figures 1 à 3, on décrit ci-après plus en détails le dispositif 3 assurant le blocage axial du rotor sur l'arbre d'entraînement.

Tel que cela apparaît sur ces figures, le dispositif 3 comprend une paire d'élément mâles 300 montés chacun pivotant autour d'un axe de pivotement 31 parallèle à l'axe X de l'arbre d'entraînement, l'axe de pivotement 31 de chaque élément mâle étant monté sur une bague 35 encastrée dans un logement 20 ménagée sur la partie supérieure du rotor 2.

Ainsi, et tel que cela apparaît sur la figure 3, le dispositif 3 et, par conséquent, les éléments mâles 300 du dispositif 3 sont montés en partie supérieure du rotor 2.

Les éléments mâles 300 sont montés de façon diamétralement opposée par rapport à l'axe X sur la bague 35. Il en va donc de même de la position diamétralement opposée des axes de pivotement 31.

De plus, chaque élément mâle 300 est sollicité élastiquement par un ressort 301, dont une extrémité prend appui sur un élément mâle et l'autre extrémité est logée dans une cavité 350 de la bague 35, ce ressort 301 étant conçu et monté de façon à agir en compression de telle sorte que chaque ressort 301 tend à faire pivoter l'élément mâle correspondant en direction de sa position de coopération avec la gorge annulaire 10 de l'arbre d'entraînement.

Plus précisément, chaque élément mâle 300 comprend :
- une terminaison d'engagement 30, s'étendant d'un côté de l'axe de pivotement 31, et contre laquelle le ressort 301 vient prendre appui, cette terminaison d'engagement 30 étant destinée à venir s'engager dans la gorge annulaire 10 de l'arbre d'entraînement pour assurer le blocage axial du rotor sur l'arbre d'entraînement ;
- une oreillette 32 s'étendant de l'autre côté de l'axe de pivotement par rapport à la terminaison d'engagement, cette oreillette constituant des moyens d'indication visuelle et/ou tactile comme expliqué par la suite.

On note que le débattement angulaire de la terminaison d'engagement 30 de chaque élément mâle 300, dans la direction selon laquelle la terminaison est excentrée par rapport à l'axe X, est limitée par un épaulement 351 ménagé sur la bague 35.

Parallèlement, les épaulements 351 diamétralement opposés ménagent entre eux un espace dans lesquels s'étendent les oreillettes 32, cet espace entre les épaulements étant également conçus pour permettre un débattement angulaire des oreillettes 32.

En outre, le rotor 2 porte une cage annulaire 33 destinée à être rapportée et fixée sur la bague 35, cette cage annulaire 33 délimitant un volume formant logement pour les éléments mâles 300.

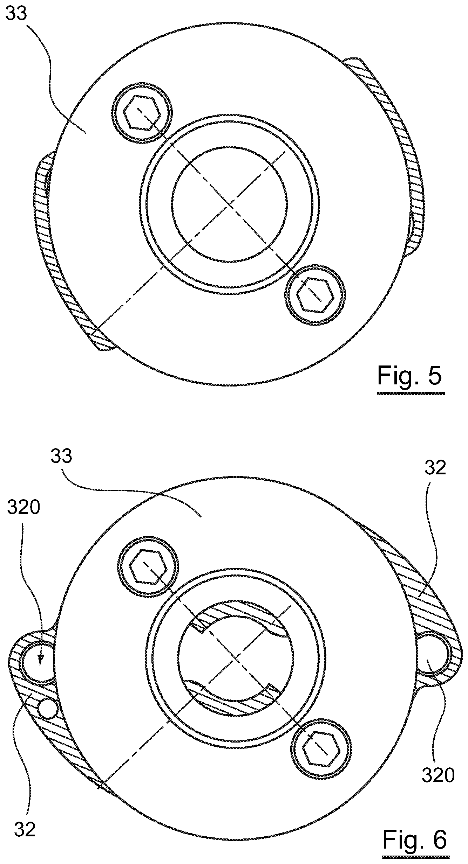

De plus, la cage annulaire 33 est pourvue d'un passage radial 330 pour chaque oreillette 32. Ces passages radiaux 330 et le dimensionnement du diamètre de la cage annulaire 33 sont conçus de façon à autoriser deux positions des moyens d'indication visuelle et/ou tactile constitués par les oreillettes 32, à savoir :
- une position d'occultation, selon laquelle les oreillettes sont logées intégralement à l'intérieur de la cage annulaire, les oreillettes n'étant donc pas visibles, ni accessibles (ou quasiment) au toucher dans cette position (figure 5) ;
- une position d'indication du blocage axial du rotor sur l'arbre d'entraînement, selon laquelle les oreillettes font saillie au travers des passages 330 de la cage annulaire 33, les oreillettes étant alors présentées à l'extérieur de la cage annulaire de façon à être visible et accessible au toucher (tel que cela apparaît sur les figures 4 et 6).

Pour augmenter encore le caractère visible des oreillettes lorsque celles-ci sont présentées en saillie au travers des passages radiaux 330 de la cage annulaire, un témoin de couleur 320 (par exemple de couleur verte) est rapportée sur la face supérieure de chaque oreillette 32.

Le blocage axial du rotor sur l'arbre d'entraînement est obtenu par le dispositif 3 qui vient d'être décrit.

Par ailleurs, la centrifugeuse comprend en outre des moyens de mesure de la vitesse de rotation de la centrifugeuse, ces moyens comprenant :
- une première partie dite émettrice portée par le rotor 2 ;
- une deuxième partie apte à détecter une fréquence de passage de la partie émettrice en un point fixe, cette deuxième partie étant montée préférentiellement sur le couvercle 40 de la centrifugeuse.

Ces première et deuxième parties constituent des moyens tachymétriques permettant d'obtenir la vitesse de rotation de l'ensemble tournant constitué par le rotor.

Selon le présent mode de réalisation, la partie émettrice portée par le rotor est constituée par les témoins 320, ceux-ci étant chacun un aimant. En parallèle, la deuxième partie apte à détecter une fréquence de passage de la partie émettrice est un capteur à effet radio-magnétique 3200 porté par le couvercle (ce capteur étant donc en un point fixe de la centrifugeuse une fois le couvercle fermé).

De plus, selon un autre aspect de l'invention illustré par les figure 6 à 10, l'un des éléments mâle 300 du dispositif de blocage axial 3 porte un organe cible 321 tandis que l'enceinte, et préférentiellement le couvercle selon le présent mode de réalisation, porte un moyen de repérage de l'organe cible 321, cet ensemble étant prévu pour former des moyens de détection du positionnement axial du rotor sur l'arbre d'entraînement dans la position correspondante à la position de coopération dudit élément mâle avec la gorge annulaire 10 de l'arbre d'entraînement 1.

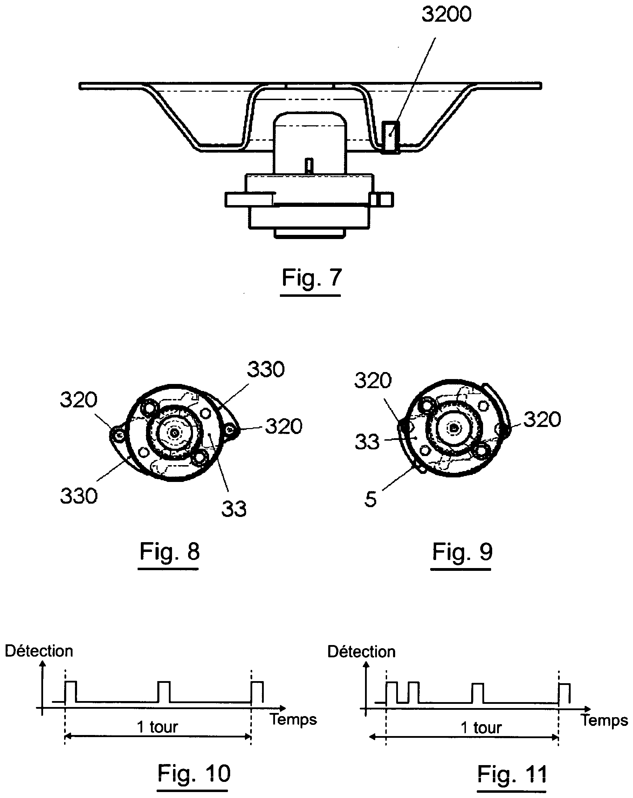

Cet organe cible est constitué selon le présent mode de réalisation par un aimant monté à une extrémité de l'oreillette 32 correspondante opposée à l'extrémité recevant le témoin 320 par rapport à l'axe de pivotement 31. On note que, selon cette disposition, lorsque le dispositif de blocage axial est en position déverrouillée, l'aimant 321 est présenté à l'extérieur de la cage annulaire 33 (figure 9) tandis que, inversement, lorsque le dispositif de blocage axial est en position verrouillée, l'aimant 5 est occulté à l'intérieur de la cage annulaire 33 (figure 8).

Ainsi, lorsque le rotor tourne et que le dispositif de blocage axial est en position verrouillé (figure 8), le capteur à effet radio-magnétique 3200 va émettre une courbe du type de celle illustrée par la figure 10 : deux signaux régulièrement espacés correspondant aux passages des témoins 320 sous le capteur à effet radio-magnétique 3200.

En revanche, lorsque le rotor tourne et que le dispositif de blocage axial n'est pas en position verrouillée (figure 9), le capteur à effet radio-magnétique 3200 va émettre une courbe du type de celle illustrée par la figure 11 : trois signaux correspondant aux passages des témoins 320 et à celui de l'aimant 5, sous le capteur à effet radio-magnétique 3200, ces signaux étant espacés de façon irrégulière deux à deux (l'aimant 321 étant plus rapproché d'un des témoins 320 que de l'autre). Dans ce cas, la courbe est interprétée comme représentative d'une position non verrouillée du rotor sur l'arbre d'entraînement et le cycle de centrifugation est immédiatement stoppé.

L'accouplement en rotation du rotor avec l'arbre d'entraînement est obtenu par la mise en oeuvre des parties constitutives décrites ci-après.

Tel que cela apparaît sur la figure 1, les moyens d'accouplement en rotation du rotor avec l'arbre d'entraînement comprennent :
- d'une part une fente diamétrale 11 s'étendant à partir de l'extrémité supérieure de l'arbre d'entraînement 1 ;
- une goupille diamétrale 34 solidaire du rotor, destinée à venir se loger dans la fente diamétrale 11 de l'arbre d'entraînement pour assurer le couplage en rotation du rotor avec l'arbre d'entraînement.

Cette goupille 34 est montée à force dans une coiffe 340 surplombant la cage annulaire 33 (la coiffe 340 et la cage annulaire formant une seule et même pièce), la goupille 34 étant introduite au travers de deux orifices 331 ménagés dans la coiffe 340 de façon diamétralement opposée.

On note que la cage annulaire 33 (et, par conséquent, la coiffe 340) est solidarisée au rotor par des moyens de vissage traversant des orifices 332 ménagés dans la cage annulaire 33 et des orifices 352 ménagés dans la bague 35 (les orifices 352 de la bague 35 étant réalisés de façon à être placés en correspondance avec les orifices 332 de la cage annulaire 33) ; il résulte de ce montage que la goupille 34 est solidaire en rotation du rotor 2.

Par ailleurs, le rotor présente des moyens de repérage 36 (figure 4) de l'orientation de la goupille 34 de façon à permettre à un opérateur de présenter le rotor dans une position angulaire selon laquelle la goupille est dans l'alignement de la fente diamétrale 11 de l'arbre d'entraînement 1.

Selon une autre caractéristique illustrée par la figure 3, une bague conique fendue 12 est montée coulissante sur l'arbre d'entraînement 1 et un ressort 13 est intercalé entre la bague 12 et un épaulement 14 ménagé sur l'arbre d'entraînement, ce ressort 13 agissant en compression et tendant à repousser la bague 12 vers l'extrémité supérieure de l'arbre d'entraînement.

Le montage de cette bague 12 est prévu de telle sorte que le rotor vienne en appui, par sa face inférieure, sur la bague 12.

De cette façon, la bague 12 et le ressort 13 constituent des moyens de rattrapage des jeux axiaux entre les parties constitutives du rotor 2 et la gorge annulaire de l'arbre d'entraînement.

Le montage du rotor sur l'arbre d'entraînement d'une centrifugeuse selon l'invention s'effectue de la façon suivante.

L'opérateur se saisit du rotor et oriente celui-ci angulairement de façon à aligner les moyens de repérage 36 indiquant l'orientation de la goupille 34 avec la fente diamétrale 11 de l'arbre d'entraînement que l'opérateur aura visualisée au préalable.

La présence de chanfreins 110 de part et d'autre de la fente 11 à l'extrémité de l'arbre d'entraînement permet d'écarter les terminaisons d'engagement 30 des éléments mâles l'une de l'autre, permettant l'engagement du rotor sur l'arbre d'entraînement.

L'opérateur procède alors à l'engagement du rotor sur l'arbre d'entraînement. La pression sur les oreillettes des éléments mâles peut être relâchée, les terminaisons d'engagement glissant alors en appui sur la surface externe de l'arbre d'entraînement. La goupille 34 s'engage dans la fente diamétrale de l'arbre d'entraînement.

L'opérateur poursuit l'engagement du rotor sur l'arbre d'entraînement, jusqu'à ce que les terminaisons d'engagement parviennent au niveau de la gorge annulaire 10 de l'arbre d'entraînement. A ce stade, sous l'action des ressorts 301, les terminaisons d'engagement 30 pénètrent la gorge annulaire 10 de l'arbre d'entraînement.

La simple mise en correspondance axiale de la position des terminaisons d'engagement avec l'emplacement de la gorge annulaire 10 de l'arbre d'entraînement suffit à engendrer le pivotement des éléments mâles autour de leur axe de pivotement 31, tel qu'indiqué par la flèche F2 sur la figure 2.

Le pivotement des éléments mâles tendant à amener les terminaisons d'engagement dans une position de coopération avec la gorge annulaire de l'arbre d'entraînement s'accompagne du déplacement de chaque oreillette 32 au travers du passage radial 330 correspondant de la cage annulaire 33, jusqu'à amener les oreillettes dans une position selon laquelle elles sont présentées en saillie au travers de ces passages radiaux et fournissent une indication visuelle et tactile indiquant que le blocage axial du rotor sur l'arbre d'entraînement est réalisé.

On note que lorsque les terminaisons d'engagement atteignent la gorge annulaire 10 de l'arbre d'entraînement, le rotor atteint une position selon laquelle il est en appui sur la bague 12 montée coulissante sur l'arbre d'entraînement et appuie légèrement sur celle-ci. Ceci tend à comprimer légèrement le ressort 13 qui repousse le rotor vers le haut. Il en résulte que les terminaisons sont également repoussées vers le haut et sont amenées en butée à l'intérieur de la gorge annulaire. Le jeu axial entre l'épaisseur des terminaisons d'engagement et la hauteur de la gorge annulaire est ainsi rattrapé.

On note que pendant la centrifugation, la rotation du rotor engendre un effet centrifuge sur les éléments mâles 300 tel qu'illustré sur la flèche F1 sur la figure 2. Cet effet centrifuge tend à augmenter l'effort de serrage des terminaisons d'engagement à l'intérieur de la gorge annulaire 10 de l'arbre d'entraînement. L'effet centrifuge (illustrée par les flèches F1) augmente ainsi de façon importante l'effort de serrage (forces F2 illustrée sur la figure 2) des éléments mâle sur l'arbre d'entraînement.

Pour procéder au retrait du rotor à partir de l'arbre d'entraînement une fois la centrifugation terminée, il suffit à l'opérateur d'appuyer sur les oreillettes 32 de façon à faire pénétrer celles-ci à l'intérieur de la cage annulaire 33, ce qui correspond à un écartement des terminaisons d'engagement entre elles jusqu'à amener celles-ci hors de la gorge annulaire 10. A ce stade, le ressort 13 jusque là comprimé tend à repousser le rotor vers le haut par l'intermédiaire de la bague coulissante 12.

L'opérateur peut alors poursuivre le désengagement du rotor sans effort.

## Revendications

1. Centrifugeuse comprenant :
- un arbre d'entraînement (1),
- un rotor (2) destiné à être monté de façon amovible sur ledit arbre d'entraînement (1) dans une position de montage pour laquelle ledit arbre d'entraînement et ledit rotor sont accouplés en rotation,
- un dispositif (3) assurant un blocage axial du rotor sur ledit arbre d'entraînement, comprenant au moins un élément mâle (300) porté par ledit rotor, sollicité élastiquement et susceptible d'occuper une position de coopération avec un élément femelle (10) ménagé sur ledit arbre d'entraînement (1),
**caractérisée en ce que** ledit ou lesdits éléments mâles (300) sont couplés à des moyens d'indication visuelle et/ou tactile (32) procurant une indication visuelle et/ou tactile de ladite position de coopération dudit ou desdits éléments mâles avec ledit élément femelle, le rotor portant une cage annulaire (33) pourvue d'au moins un passage radial au travers duquel lesdits moyens d'indication visuelle et/ou tactile (32) sont destinés à être présentés en saillie, la cage annulaire (33) étant solidarisée au rotor, et ledit ou lesdits éléments mâles (300) étant montés pivotants autour d'un axe de pivotement parallèle à l'axe dudit arbre d'entraînement.

2. Centrifugeuse selon la revendication 1, **caractérisée en ce que** ledit ou lesdits éléments mâles (300) comprennent, d'un côté dudit axe de pivotement, une terminaison d'engagement avec ledit élément femelle (10) et, de l'autre côté dudit axe de pivotement, une oreillette destinée à constituer des moyens d'indication visuelle et/ou tactile.

3. Centrifugeuse selon la revendication 1, **caractérisée en ce que** ledit ou lesdits éléments mâles (300) sont montés en partie supérieure dudit rotor (2).

4. Centrifugeuse selon l'une quelconque des revendications 1 à 3, **caractérisée en ce que** le rotor (2) porte une goupille (34) diamétrale destinée à venir se loger dans une fente diamétrale dudit arbre d'entraînement pour assurer le couplage en rotation dudit rotor avec ledit arbre d'entraînement.

5. Centrifugeuse selon les revendications 1 et 4, **caractérisée en ce que** ladite goupille (34) est montée dans une coiffe (340) surplombant ladite cage annulaire (33).

6. Centrifugeuse selon l'une des revendications 4 et 5, **caractérisée en ce que** ledit rotor (2) présente des moyens de repérage de l'orientation de ladite goupille.

7. Centrifugeuse selon l'une quelconque des revendications 1 à 6, **caractérisée en ce qu'**elle comprend des moyens de rattrapage (12,13) des jeux axiaux.

8. Centrifugeuse selon la revendication 7, **caractérisée en ce que** lesdits moyens de rattrapage comprennent une bague (12) montée coulissante sur ledit arbre d'entraînement (1) et contre laquelle ledit rotor est destiné à venir en appui, un ressort (13) étant couplé à ladite bague (12) et audit arbre (1) de façon à agir en compression à l'encontre de la poussée vers le bas dudit rotor (2).

9. Rotor (2) destiné à être monté de façon amovible sur un arbre d'entraînement (1) d'une centrifugeuse, dans une position de montage pour laquelle ledit arbre d'entraînement et ledit rotor sont accouplés en rotation, ledit rotor portant au moins un élément mâle (300), sollicité élastiquement et susceptible d'occuper une position de coopération avec un élément femelle (10) ménagé sur ledit arbre d'entraînement de façon à assurant un blocage axial du rotor (2) sur ledit arbre d'entraînement (1),
**caractérisé en ce que** ledit ou lesdits éléments mâles sont couplés à des moyens d'indication visuelle et/ou tactile (32) procurant une indication visuelle et/ou tactile de ladite position de coopération dudit ou desdits élément mâle, le rotor portant une cage annulaire (33) pourvue d'au moins un passage radial au travers duquel lesdits moyens d'indication visuelle et/ou tactile sont destinés à être présentés en saillie, la cage annulaire (33) étant solidarisée au rotor, et ledit ou lesdits éléments mâles étant montés pivotants autour d'un axe de pivotement parallèle à l'axe dudit arbre d'entraînement.

## Patentansprüche

1. Zentrifuge, umfassend:
- eine Antriebswelle (1),
- einen Rotor (2), der dazu bestimmt ist, abnehmbar an der Antriebswelle (1) in einer Montageposition montiert zu werden, in der die Antriebswelle und der Rotor rotatorisch gekoppelt sind,
- eine Vorrichtung (3), die eine axiale Blockierung des Rotors an der Antriebswelle gewährleistet und wenigstens ein von dem Rotor getragenes männliches Element (300) umfasst, das elastisch vorgespannt ist und imstande ist, eine Position des Zusammenwirkens mit einem weiblichen Element (10) einzunehmen, das an der Antriebswelle (1) ausgebildet ist,
**dadurch gekennzeichnet, dass** das oder die männlichen Elemente (300) mit Mitteln zur visuellen und/oder taktilen Anzeige (32) gekoppelt sind, die eine visuelle und/oder taktile Anzeige der Position des Zusammenwirkens des oder der männlichen Elemente mit dem weiblichen Element bereitstellen, wobei der Rotor einen ringförmigen Käfig (33) trägt, der mit wenigstens einem radialen Durchgang versehen ist, durch den hindurch die Mittel zur visuellen und/oder taktilen Anzeige (32) präsentiert werden sollen, wobei der ringförmige Käfig (33) mit dem Rotor fest verbunden ist und das oder die männlichen Elemente (300) um eine Schwenkachse schwenkbar montiert sind, die parallel zur Achse der Antriebswelle ist.

2. Zentrifuge nach Anspruch 1, **dadurch gekennzeichnet, dass** das oder die männlichen Elemente (300) auf der einen Seite der Schwenkachse ein Ende zum Eingriff mit dem weiblichen Element (10) und auf der anderen Seite der Schwenkachse einen ohrförmigen Ansatz umfassen, der dazu bestimmt ist, die Mittel zur visuellen und/oder taktilen Anzeige zu bilden.

3. Zentrifuge nach Anspruch 1, **dadurch gekennzeichnet, dass** das oder die männlichen Elemente (300) am oberen Teil des Rotors (2) montiert sind.

4. Zentrifuge nach einem beliebigen der Ansprüche 1 bis 3, **dadurch gekennzeichnet, dass** der Rotor (2) einen Diametral-Stift (34) trägt, der dazu bestimmt ist, in einem Diametral-Schlitz der Antriebswelle aufgenommen zu werden, um die rotatorische Kopplung des Rotors mit der Antriebswelle zu gewährleisten.

5. Zentrifuge nach den Ansprüchen 1 und 4, **dadurch gekennzeichnet, dass** der Stift (34) in einer Haube (340) montiert ist, die den ringförmigen Käfig (33) überragt.

6. Zentrifuge nach einem der Ansprüche 4 und 5, **dadurch gekennzeichnet, dass** der Rotor (2) Mittel zur Markierung der Ausrichtung des Stifts umfasst.

7. Zentrifuge nach einem beliebigen der Ansprüche 1 bis 6, **dadurch gekennzeichnet, dass** sie Mittel zum Ausgleich (12, 13) der radialen Spiele umfasst.

8. Zentrifuge nach Anspruch 7, **dadurch gekennzeichnet, dass** die Ausgleichsmittel einen Ring (12) umfassen, der gleitbar an der Antriebswelle (1) montiert ist und mit dem der Rotor in Anlage bringbar ist, wobei eine Feder (13) mit dem Ring (12) und der Welle (1) derart gekoppelt ist, dass sie bei Kompression dem abwärts gerichteten Schub des Rotors (2) entgegenwirkt.

9. Rotor (2), der dazu bestimmt ist, abnehmbar an einer Antriebswelle (1) einer Zentrifuge in einer Montageposition montiert zu werden, in der die Antriebswelle und der Rotor rotatorisch gekoppelt sind, wobei der Rotor wenigstens ein männliches Element (300) trägt, das elastisch vorgespannt ist und imstande ist, eine Position des Zusammenwirkens mit einem weiblichen Element (10) einzunehmen, das an der Antriebswelle ausgebildet ist, derart, dass eine axiale Blockierung des Rotors (2) an der Antriebswelle (1) gewährleistet wird,
**dadurch gekennzeichnet, dass** das oder die männlichen Elemente mit Mitteln zur visuellen und/oder taktilen Anzeige (32) gekoppelt sind, die eine visuelle und/oder taktile Anzeige der Position des Zusammenwirkens des oder der männlichen Elemente bereitstellen, wobei der Rotor einen ringförmigen Käfig (33) trägt, der mit wenigstens einem radialen Durchgang versehen ist, durch den hindurch die Mittel zur visuellen und/oder taktilen Anzeige präsentiert werden sollen, wobei der ringförmige Käfig (33) mit dem Rotor fest verbunden ist und das oder die männlichen Elemente um eine Schwenkachse schwenkbar montiert sind, die parallel zur Achse der Antriebswelle ist.

## Claims

1. Centrifuge, comprising:
- a drive shaft (1),
- a rotor (2) intended to be mounted removably on the said drive shaft (1) in a mounting position in which the said drive shaft and the said rotor are coupled in rotation,
- a device (3) which ensures axial blocking of the rotor on the said drive shaft and comprises at least one male element (300), which is carried by the said rotor, is resiliently stressed and is capable of occupying a position of interaction with a female element (10) formed on the said drive shaft (1),
**characterised in that** the said male element or elements (300) are coupled to visual and/or tactile indication means (32) providing a visual and/or tactile indication of the said interaction position of the said male element or elements with the said female element, the rotor carrying an annular cage (33) provided with at least one radial passage through which the said visual and/or tactile indication means (32) are intended to be presented by projecting, the annular cage (33) being secured to the rotor and the male element or elements (300) being mounted so as to pivot about a pivot axis parallel to the axis of the said drive shaft.

2. Centrifuge according to Claim 1, **characterised in that**, the said male element or elements (300) comprise, on one side of the said pivot axis, an end-piece for engagement with the said female element (10) and, on the other side of the said pivot axis, a lug intended to constitute visual and/or tactile indication means.

3. Centrifuge according to Claim 1, **characterised in that** the said male element or elements (300) are mounted on the upper part of the said rotor (2).

4. Centrifuge according to any one of Claims 1 to 3, **characterised in that** the rotor (2) carries a diametral pin (34) intended to be received in a diametral slot of the said drive shaft in order to ensure rotational coupling of the said rotor with the said drive shaft.

5. Centrifuge according to any one of Claims 1 to 4, **characterised in that** the said pin (34) is mounted in a cap (340) extending beyond the said annular cage (33).

6. Centrifuge according to any one of Claims 4 and 5, **characterised in that** the said rotor (2) has means for identifying the orientation of the said pin.

7. Centrifuge according to any one of Claims 1 to 6, **characterised in that** it comprises means (12, 13) for taking up axial plays.

8. Centrifuge according to Claim 7, **characterised in that** the said take-up means comprise a ring (12) which is mounted so as to slide on the said drive shaft (1) and against which the said rotor is intended to bear, a spring (13) being coupled to the said ring (12) and to the said shaft (1) so as to acting compression against the downward thrust of the said rotor (2).

9. Rotor (2) intended to be mounted removably on a drive shaft (1) of a centrifuge, in a mounting position in which the said drive shaft and the said rotor are coupled in rotation, the rotor carrying at least one male element (300), which is resiliently stressed and is capable of occupying a position of interaction with a female element (10) formed on the said drive shaft (1), so as to ensure axial blocking of the rotor (2) on the said drive shaft (1),
**characterised in that** the said male element or elements (300) are coupled to visual and/or tactile indication means (32) providing a visual and/or tactile indication of the said interaction position of the said male element or elements with the said female element, the rotor carrying an annular cage (33) provided with at least one radial passage through which the said visual and/or tactile indication means (32) are intended to be presented by projecting, the annular cage (33) being secured to the rotor and the male element or elements (300) being mounted so as to pivot about a pivot axis parallel to the axis of the said drive shaft.
